Europäisches Patentamt

European Patent Office

Office européen des brevets

(19)

(11) Numéro de publication: **0 418 150 B1**

(12) **FASCICULE DE BREVET EUROPEEN**

(45) Date de publication de fascicule du brevet: **22.03.95** (51) Int. Cl.⁶: **B29C 70/00**, B32B 17/04, B29B 15/12

(21) Numéro de dépôt: **90402506.1**

(22) Date de dépôt: **12.09.90**

(54) **Dispositif d'enrobage des fibres d'un faisceau par de la résine.**

(30) Priorité: **14.09.89 FR 8912064**

(43) Date de publication de la demande:
**20.03.91 Bulletin 91/12**

(45) Mention de la délivrance du brevet:
**22.03.95 Bulletin 95/12**

(84) Etats contractants désignés:
**AT BE CH DE DK ES FR GB GR IT LI LU NL SE**

(56) Documents cités:
**EP-A- 0 300 321
EP-A- 0 320 650
EP-A- 0 320 653
US-A- 3 874 030
US-A- 4 728 387**

(73) Titulaire: **VETROTEX SAINT-GOBAIN
10, place Pierre de Coubertin
F-73000 Chambéry (FR)**

(72) Inventeur: **Bates, Philip John
295 River Road,
Sault Ste Marie
Montréal,
Ouébec P6A 5K9 (CA)**
Inventeur: **Charrier, Jean-Michel
133 Ferland, Ile des Soeurs, PO
Montréal,
Ouébec H3E 1K6 (CA)**

(74) Mandataire: **Breton, Jean-Claude et al
SAINT-GOBAIN RECHERCHE
39, quai Lucien Lefranc
F-93300 Aubervilliers Cedex (FR)**

EP 0 418 150 B1

**Description**

La présente invention concerne un dispositif d'enrobage en continu des fibres d'un faisceau par de la résine, du type comprenant au moins trois surfaces d'appui, à savoir une première surface d'appui, une deuxième surface d'appui convexe, placée à distance et à la suite dans le sens d'avancement du faisceau, de la première surface, et une troisième surface d'appui, placée à distance et à la suite de la deuxième surface, décalée en hauteur par rapport à au moins l'une des deux premières surfaces, lesdites surfaces définissant entre elles des cheminements pour les fibres, des moyens de traction des fibres sous tension le long desdits cheminements, et des moyens d'enrobage des fibres par de la résine sur au moins une fraction de leurs cheminements.

Elle trouve une application particulièrement importante, bien que non exclusive, dans le domaine de l'enrobage d'un faisceau de fibres de verre par de la résine, afin d'en améliorer la résistance à terme, en évitant notamment l'usure par frottement des fibres du faisceau les unes contre les autres grâce audit enrobage.

On connaît des méthodes et dispositifs d'enrobage de libres par de la résine.

Par exemple, le brevet US-A 4 728 387 décrit un dispositif d'enrobage d'un faisceau de fibres de verre comprenant au moins une surface convexe, d'écartement des fibres entre elles, et au moins une surface non convexe, contre lesquelles on fait défiler sous tension le faisceau de fibres en lui injectant de la résine à travers un orifice qui débouche à l'emplacement de la surface non convexe.

Mais ce dispositif présente des inconvénients.

En particulier, les fibres que l'on cherche à étaler sur la surface convexe pour en permettre l'imprégnation par la résine, ne s'écartent pas toujours correctement les unes des autres et, soit restent groupées au sommet de la surface convexe, soit forment deux ou plusieurs faisceaux séparés de part et d'autre du sommet de la surface convexe. Il en résulte une imprégnation irrégulière des fibres du faisceau par la résine.

La présente invention vise à fournir un dispositif du type ci-dessus défini répondant mieux que ceux antérieurement connus, aux exigences de la pratique, notamment en ce qu'il permet un étalement et un écartement régulier des fibres sur la surface convexe, et assure ainsi une bonne imprégnation des fibres par la résine.

Le dispositif selon l'invention est par ailleurs simple à mettre en oeuvre. Il permet un enrobage de bonne qualité particulièrement rapide, avec un coût de fabrication du faisceau enrobé de résine plus faible qu'avec les dispositifs connus.

Dans ce but, l'invention propose notamment un dispositif du type ci-dessus défini comprenant au moins trois surfaces d'appui, caractérisé en ce que : la première surface présente une configuration sensiblement concave, agencée pour regrouper les fibres du faisceau sensiblement en un même point de regroupement (P), la deuxième surface, convexe, est au moins partiellement une surface de révolution autour d'un axe horizontal, appartenant à une surface de rayon maximum R symétrique par rapport à un plan de symétrie vertical passant par le point de regroupement (P), et remplit sensiblement la condition suivante, r désignant le rayon de la portion de révolution de la deuxième surface située à une distance x du plan de symétrie passant par le point de regroupement (P) :

$$r = R\left[1 - \frac{\left(\sqrt{1 + (x/L)^2} - 1\right)}{(\pi/2 - \phi)(R/L)}\right] \quad (1)$$

où L désigne la longueur de la tangente à la surface symétrique passant par le point de regroupement (P), dans le plan de symétrie, entre ledit point de regroupement (P) et le point de tangence à ladite surface symétrique, et $\phi$ désigne l'angle en radian entre ladite tangente et la verticale, les moyens d'enrobage des fibres étant constitués par un bain de résine.

L'invention propose également un dispositif du type ci-dessus défini comprenant au moins trois surfaces d'appui d'un faisceau de fibres, caractérisé en ce que :
- la première surface présente une configuration sensiblement concave, agencée pour regrouper les fibres du faisceau sensiblement en un même point de regroupement (P),

- et la deuxième surface présente une configuration telle que, lors de la mise sous tension des fibres par les moyens de traction, les libres s'écartent les unes des autres au contact de ladite deuxième surface en délimitant des portions de cheminements divergentes pour les fibres entre les première et deuxième surfaces, et des portions de cheminements parallèles ou convergentes pour les fibres entre les deuxième et troisième surfaces, lesdites portions de cheminements divergentes étant de longueurs égales ou sensiblement égales entre le point de regroupement (P), et les points d'inflexions entre portions divergentes et portions parallèles ou convergentes correspondantes de cheminement desdites fibres, situés sur ladite deuxième surface, et lesdites portions de cheminement parallèle ou convergentes étant de longueurs égales ou sensiblement égales entre lesdits points d'inflexions et ladite troisième surface, les moyens d'enrobage des fibres étant constitués par un bain de résine.

Dans le cas de portions de cheminements parallèles, les longueurs sont mesurées entre lesdits points d'inflexions sur la deuxième surface et les points d'inflexions situés sur la troisième surface, entre les cheminements parallèles et tous autres types de cheminements des fibres après la troisième surface (en général convergents).

Dans le cas de portions de cheminement convergentes sensiblement en un point (P') après la deuxième surface, les longeurs sont mesurées entre lesdits points d'inflexions sur la deuxième surface et le point de convergence (P'), en l'occurrence avantageusement situé sur la troisième surface.

Par égales ou sensiblement égales, il faut entendre des différences entre longueurs ne dépassant pas quelques centaines voire dizaines de $\mu$m.

Dans des modes de réalisation avantageux, on a recours, en outre, à l'une eL'ou à l'autre des dispositions suivantes :

- la troisième surface d'appui est sensiblement concave, agencée pour regrouper les fibres du faisceau sensiblement en un même point de regroupement (P');
- la troisième surface d'appui est convexe, identique à la deuxième surface, les cheminements des fibres entre les deuxième et troisième surfaces convexes étant parallèles ;
- le dispositif comporte plusieurs surfaces sensiblement concaves de regroupement de fibres sensiblement en de mêmes points de regroupement respectifs, disposées alternativement avec des surfaces convexes d'écartement desdites fibres, lesdites surfaces convexes présentant des configurations délimitant des portions de cheminement divergentes de fibres de longueurs égales ou sensiblement égales entre lesdits points de regroupement respectifs et les points des surfaces convexes en vis à vis, où se produit l'inflexion entre portions divergentes et portions convergentes correspondantes de cheminement desdites fibres ;
- le dispositif comporte plusieurs surfaces concaves de regroupement de fibres sensiblement en de mêmes points de regroupement respectifs alignés ($P_1$, $P_2$, ...$P_n$) disposées alternativement avec des surfaces convexes d'écartement desdites fibres, lesdites surfaces convexes étant au moins partiellement de révolution de rayon maximum R autour d'axes horizontaux respectifs, étant symétriques par rapport à un même plan de symétrie vertical passant par lesdits points de regroupement ($P_1$, $P_2$, .. $P_n$) et remplissant sensiblement la condition suivante, r désignant le rayon de la portion de révolution des surfaces convexes respectives, située à une distance x du plan de symétrie passant par les points de regroupement ($P_1$, $P_2$, ... $P_n$) :

$$r = R \left[ 1 - \frac{(\sqrt{1 + (x/L)^2} - 1)}{(\pi/2 - \phi)(R/L)} \right] \quad (1)$$

où L désigne la longueur de la tangente à une surface convexe passant par le point de regroupement ($P_1$) correspondant dans ledit plan de symétrie, entre ledit point de regroupement ($P_1$) et le point de tangence à ladite surface convexe, et désigne l'angle en radian entre ladite tangente et la verticale ;
- les surfaces sensiblement concaves et les surfaces convexes appartiennent à des barreaux d'axes horizontaux ;
- les moyens d'enrobage desdites fibres par de la résine sont constitués par un bain de résine ;
- le dispositif comporte deux barreaux identiques de surface sensiblement concave et deux barreaux identiques de surface convexe, disposés entre les deux barreaux de surface sensiblement concave ;

- les surfaces sensiblement concaves présentent une section droite en oméga majuscule dont les branches latérales sont inclinées vers l'extérieur et dont la partie centrale est horizontale, de longueur inférieure à de l'ordre de 1 cm, et avantageusement de l'ordre de 3 mm ;
- les surfaces d'appui sont recouvertes de céramique.

L'invention sera mieux comprise à la lecture de la description qui suit de modes particuliers de réalisation, donnés à titre d'exemples non limitatifs.

La description se réfère aux dessins qui l'accompagnent dans lesquels :

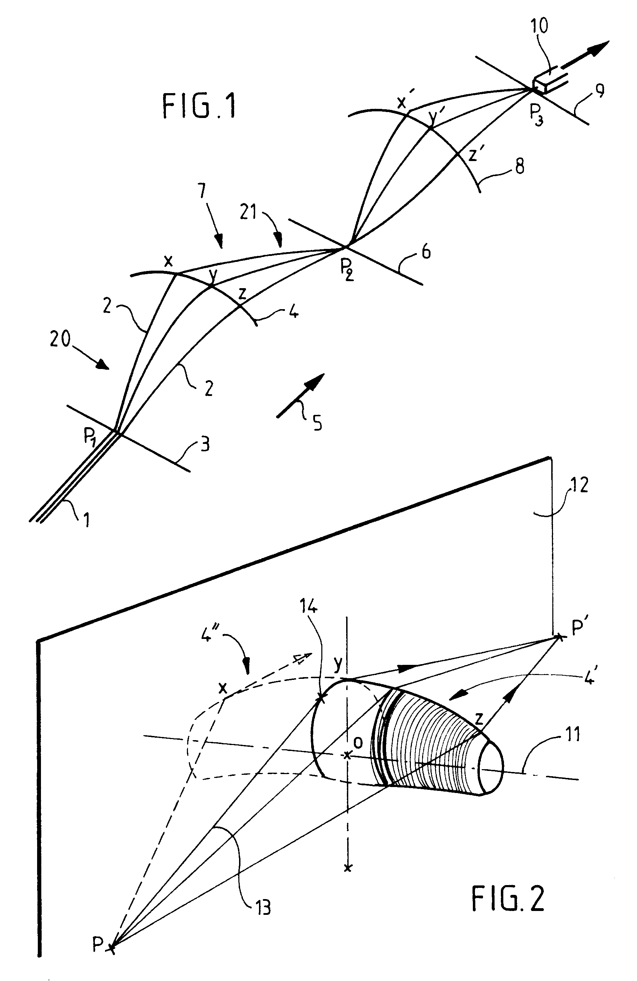

. **la figure 1** est un schéma de principe en perspective montrant un agencement des surfaces d'appui d'un faisceau de fibres, selon un mode de réalisation de l'invention,

. **la figure 2** est un schéma en perspective d'une deuxième surface selon l'invention,

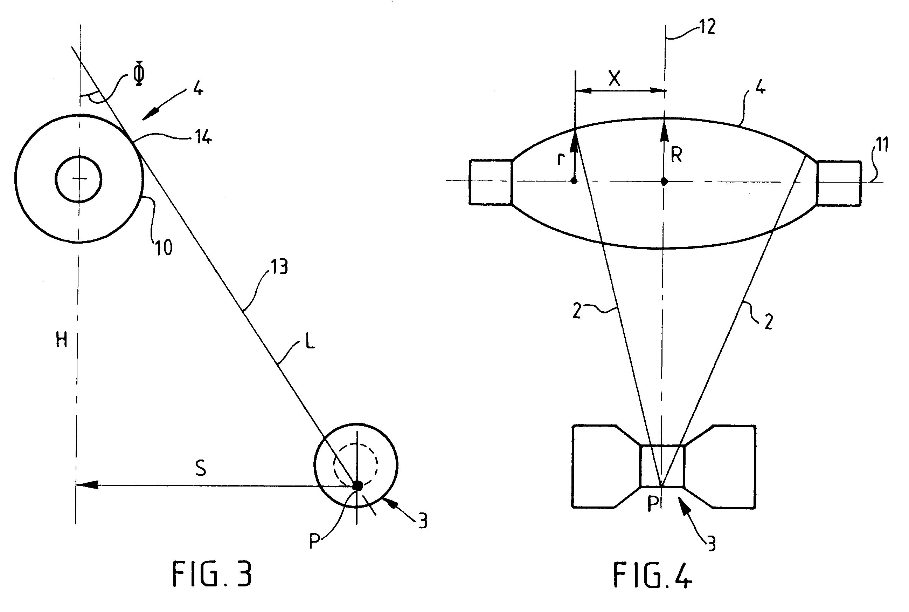

. **les figures 3 et 4** sont respectivement des vues de profil et de dessus d'un autre mode de réalisation des première et deuxième surfaces selon l'invention,

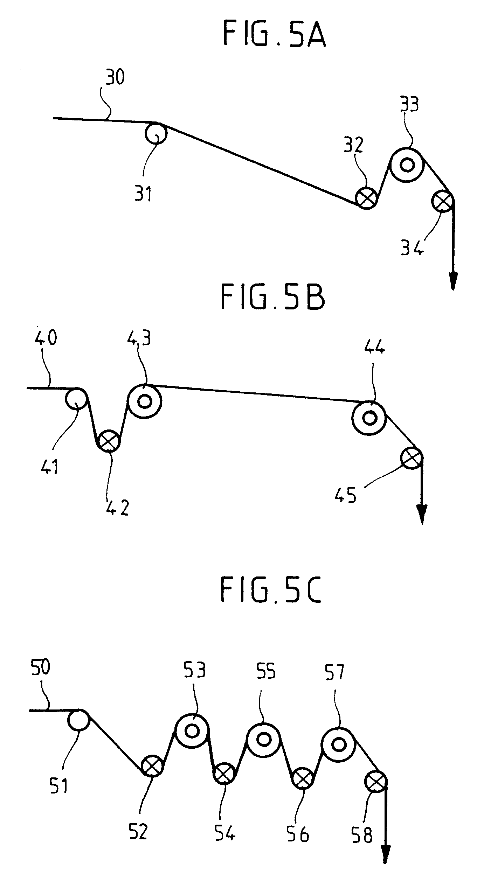

. **les figures 5a, 5b et 5c** sont des schémas, en vue de profil de barres d'appui appartenant à trois dispositifs selon des modes de réalisation avantageux de l'invention,

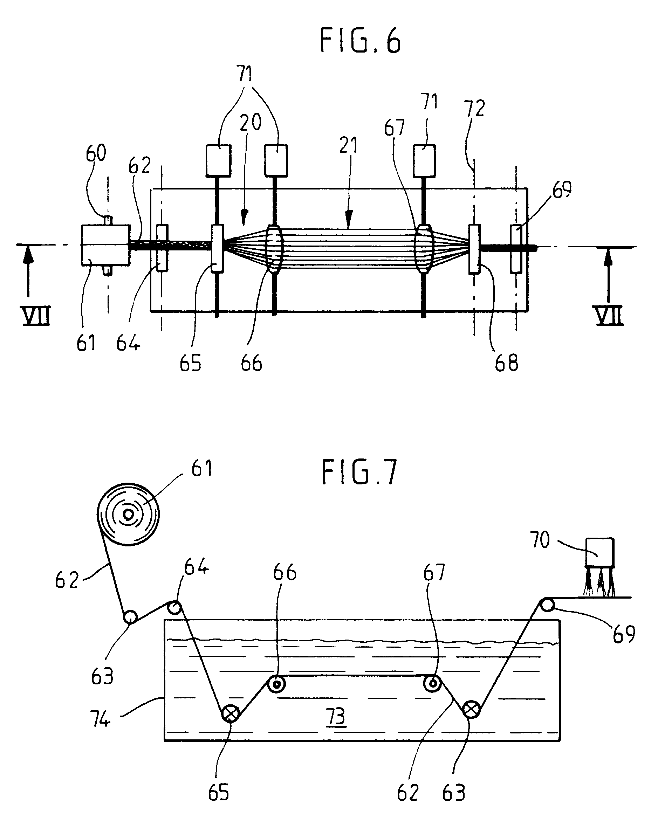

. **la figure** 6 est une vue de dessus, schématique du dispositif selon un mode préféré de réalisation de l'invention,

. **la** figure **7** est une coupe suivant VII-VII de la figure 6,

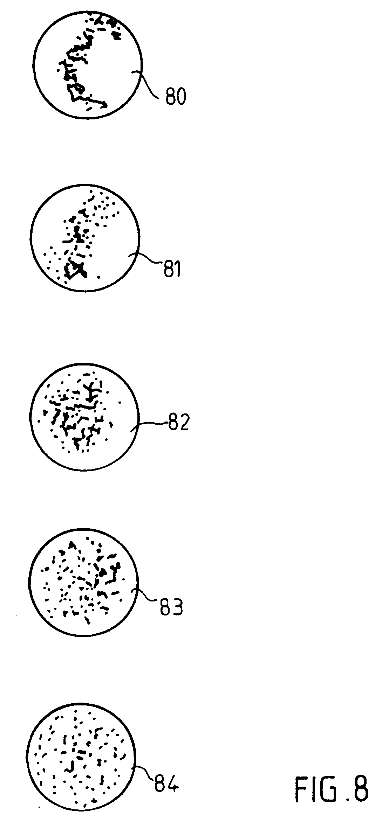

. **la** figure **8** représente un système de notation et d'appréciation empirique de l'imprégnation des fibres d'un faisceau par de la résine.

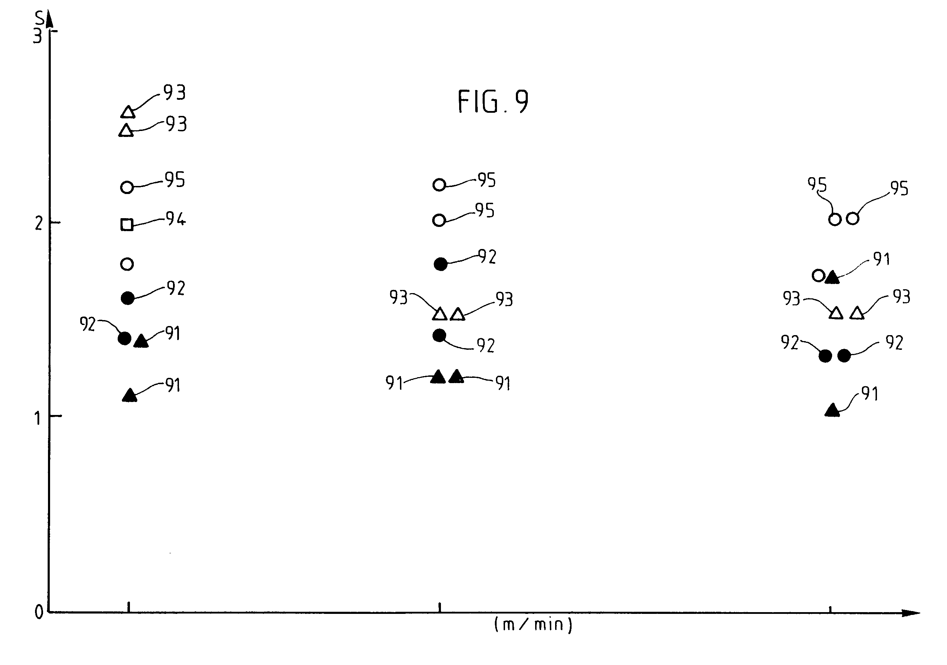

. **la** figure **9** est un diagramme des résultats d'imprégnation obtenus avec différents types de dispositifs de l'art antérieur et selon l'invention.

La figure 1 montre l'agencement des différentes surfaces d'appui d'un faisceau de fibres, selon un mode de réalisation du dispositif de l'invention.

Le faisceau 1 de fibres 2, par exemple de fibres de verre, vient en appui sur une première surface d'appui 3 du faisceau, sensiblement concave, ladite surface étant située au-dessus du faisceau 1, puis sur une deuxième surface d'appui 4 du faisceau, convexe, placée à distance et à la suite de la première surface 3, dans le sens d'avancement 5 du faisceau 1.

La deuxième surface 4 est décalée en hauteur par rapport à la première surface 3, et est située en dessous du faisceau 1.

Le dispositif comprend une troisième surface d'appui 6 du faisceau de fibres, sensiblement concave, placée à distance au-dessous et à la suite de la deuxième surface 4, et située au-dessus du faisceau 1. Les différentes surfaces définissent entre elles des cheminements 7 pour les fibres 2 du faisceau 1.

Sur la figure 1, une quatrième surface convexe 8 a été prévue ainsi qu'une cinquième surface sensiblement concave 9, disposée à la suite de la quatrième surface 8, l'agencement des surfaces 6, 8 et 9 entre elles étant similaire à celui des surfaces 3, 4 et 6 entre elles.

L'agencement des surfaces les unes par rapport aux autres permet au faisceau de fibres, alternativement placé au-dessus et au-dessous desdites surfaces, de suivre le cheminement choisi, les fibres étant alors réparties suivant des cheminements déterminés.

Des moyens 10 de traction des fibres sous tension le long desdits cheminements, de type connu, sont prévus, les moyens d'enrobage des fibres, non représentés sur la figure 1, étant avantageusement constitués par un bain de résine dans lequel sont placés le faisceau et les surfaces d'appui dudit faisceau.

Sur les figures 2, 3 et 4 on a représenté des configurations de surfaces d'appui du faisceau, selon les modes de réalisation de l'invention plus particulièrement décrit ici.

Comme indiqué précédemment, les dispositifs de l'art antérieur ne permettent pas toujours un écartement suffisant des fibres entre elles, ce qui entraîne une imprégnation insuffisante des fibres par la résine.

Pour éliminer cet inconvénient, l'invention part de la constatation faite par l'inventeur qu'un écartement correct des fibres est obtenu de façon répétitive et satisfaisante lorsque la première surface 3 présente une configuration sensiblement concave, agencée pour regrouper les fibres du faisceau sensiblement en un même point de regroupement (P) et, simultanément, la deuxième surface 4 ou 4′ est convexe, au moins partiellement de révolution autour d'un axe horizontal 11, ladite deuxième surface 4 ou 4′ appartenant à, ou étant confondue avec, une surface 4″ symétrique par rapport à un plan vertical 12 passant par le point de regroupement (P), et remplit sensiblement la condition suivante :

$$r = R \left[ 1 - \frac{(\sqrt{1 + (x/L)^2} - 1)}{(\pi/2 - \phi)\,(R/L)} \right] \quad (1)$$

où r est le rayon de la portion de révolution 4′ de la deuxième surface, portion située à une distance x du plan de symétrie 12 passant par le point de regroupement (P), R est le rayon maximum autour de l'axe horizontal 11 de la surface symétrique 4″, L désigne la longueur de la tangente 13, à la surface symétrique 4″, passant par le point de regroupement (P) et le point de tangence 14 à ladite surface symétrique 4″ et $\phi$ désigne l'angle en radian entre la tangente 13 et la verticale.

Le "point" de regroupement (P) présente par exemple une largeur de l'ordre de 3 mm. Ce qui compte c'est que ledit "point" de regroupement soit d'une largeur faible par rapport à la largeur d'étalement des fibres sur la surface convexe, ou encore par rapport à la dimension latérale (perpendiculaire au sens longitudinal de cheminement du faisceau) de la surface d'appui convexe.

On peut encore exprimer les relations entre les paramètres mentionnés ci-dessus par les deux équations suivantes :

$$\phi = \tan^{-1} \left[ \frac{S - R\cos\phi}{H - R\sin\phi} \right] \quad (2)$$

$$L = \left[ \frac{H + R\sin\phi}{\cos\phi} \right] \quad (3)$$

H étant la distance verticale entre l'axe horizontal 11 et le plan horizontal passant par (P) et S la distance horizontale entre le plan vertical passant par l'axe horizontal 11 et le point de regroupement (P).

Ces formules permettent le calcul des surfaces convexes 4, 8..., et peuvent par exemple être introduites dans la programmation d'un tour à commande numérique, pour usiner automatiquement des barres munies de telles surfaces convexes.

Les unités à employer dans les formules ci-dessus doivent bien évidemment être cohérentes entre elles.

Une autre façon de définir l'invention consiste à remarquer que (voir figure 1) avec un dispositif selon l'invention, la deuxième surface présente une configuration telle que, lors de la mise sous tension des fibres par des moyens de traction 10, les fibres s'écartent les unes des autres, au contact de ladite deuxième surface 4 en délimitant des portions 20 de cheminement divergentes, entre la première surface 3 et la deuxième surface 4, et des portions 21 de cheminement parallèles ou convergentes pour les fibres entre la deuxième surface 4 et la troisième surface 6, et ce de façon telle que les portions 20 de cheminement divergentes soient de longueurs égales ou sensiblement égales entre elles et les portions 21 de cheminement parallèles ou convergentes soient de longueurs égales ou sensiblement égales entre elles.

En se référant à la figure 1, les surfaces convexes et concaves selon l'invention sont donc telles que $P_1$, $P_2$, $P_3$ désignant les points de regroupement des fibres sur les surfaces concaves 3, 6, 9 et X, Y, Z et X′, Y′, Z′ indiquant des points d'inflexion de cheminements des fibres sur les surfaces convexes 4 et 8 :

$P_1X = P_1Y = P_1Z.. ; P_2X = P_2Y = P_2Z.. ;$
$P_2X′ = P_2Y′ = P_2Z′.. ; P_3X′ = P_3Y′ = P_3Z′.. ;$

On a représenté sur la figure 4, un exemple de réalisation nullement limitatif de la surface sensiblement concave selon l'invention. Elle présente une section droite en forme d'oméga majuscule (inversé) dont les deux branches sont inclinées vers l'extérieur.

Sur les figures 5a, 5b, 5c, on a représenté à titre d'exemple des configurations schématiques d'agencement de surfaces selon l'invention, constituées par des barreaux montés fixement ou rotativement autour de leur axe.

Trois types de barreaux, cylindriques, concaves et convexes sont représentés schématiquement sur les figures 5a, 5b et 5c, respectivement figurés par des cercles, des cercles avec croix et des doubles cercles concentriques.

La figure 5a montre un faisceau 30 passant sur un premier barreau cylindrique 31, sous un second barreau 32 de surface concave selon l'invention, sur un troisième barreau 33 de surface convexe selon l'invention et enfin sur un quatrième barreau 34 concave selon l'invention.

La figure 5b montre un autre agencement particulièrement avantageux de barreaux selon l'invention. Le faisceau 40 passe sur au moins un premier barreau cylindrique 41 de guidage, sous un second barreau 42 de surface concave selon l'invention, puis sur un troisième barreau 43 et un quatrième barreau 44, tous deux de surfaces convexes selon l'invention, les cheminements des fibres après écartement par le barreau convexe 43 étant parallèles entre les troisième et quatrième barreaux 43 et 44. Les fibres sont ensuite ramenées sensiblement en un même point de regroupement sur un cinquième barreau 45 concave selon l'invention. Les longueurs des portions de cheminement de fibres entre deux barreaux successifs sont égales ou sensiblement égales.

Enfin la figure 5c montre un agencement où barreaux concaves 52, 54, 56, 58 et convexes 53, 55, 57 sont disposés alternativement sur le trajet de la fibre 50, après passage en appui sur un premier barreau 51, par exemple cylindrique.

Les inventeurs ont, par ailleurs, constaté expérimentalement qu'un nombre inférieur ou égal à un total de 8 barreaux concaves et convexes était avantageux.

Le dispositif de l'invention est utilisable avec tous types de fibres et en particulier avec des faisceaux de fibres de verre, par exemple de verre alcali-résistant ou de verre du type connu sous la dénomination verre du type E. Dans le cas d'un faisceau de fibres de verre, les fibres ont, par exemple, des diamètres moyens de l'ordre de 10 à 20 microns. Le faisceau de fibres se présente au départ en rouleau "dit roving" par exemple d'un poids de 1200 g pour mille mètres de faisceau.

La résine utilisée peut être de tout type, pourvu qu'elle soit compatible, entre autre chimiquement avec le matériau des fibres à enrober. A titre d'exemple, bien entendu non limitatif, pour l'enrobage de fibres de verre on peut citer les résines polymériques ou les résines thermoplastiques, comme par exemple un nylon, du type connu sous la dénomination ICI A100 Maranyl de viscosité de l'ordre de 60 Pa.s ou du polypropylène connu sous la dénomination SOLVAY Eltex P RY210 de viscosité de l'ordre de 600 Pa.s.

De façon évidente, plus la viscosité est importante plus l'imprégnation sera difficile. Mais avec un dispositif selon l'invention, on va pouvoir utiliser des résines de forte viscosité, pouvant atteindre 10.000 Pa.s.

Une vitesse de passage du faisceau dans le bain de résine de l'ordre de 2 mètres par minute, à de l'ordre de 20 à 30 mètres par minute est avantageusement utilisée avec le dispositif de l'invention.

La vitesse dépend bien évidemment de nombreux facteurs mais elle peut atteindre des valeurs de 50 à 100 mètres par minute avec un dispositif selon l'invention tout en permettant de bons résultats d'imprégnation.

La tension exercée par le dispositif de traction dépend de différents paramètres dont la viscosité de la résine, la vitesse de déplacement du faisceau dans le bain, etc...

Par exemple, dans le cas d'un faisceau de fibres de verre de type E, d'un nombre de surfaces d'appui inférieur à huit et d'une résine de viscosité par exemple de l'ordre de 200 Pa.s, une traction de l'ordre de 50 kg s'est révélée suffisante pour obtenir une vitesse et un enrobage satisfaisant.

Un revêtement en céramique par exemple à base de nitrure de titane est par ailleurs et par exemple avantageusement prévu sur les surfaces d'appui, pour minimiser les frottements.

Les figures 6 et 7 montrent un mode de réalisation préféré d'un dispositif selon l'invention.

Le dispositif comprend un support 60 pour un rouleau ou "Roving" 61 constitué par le faisceau 62 de fibres de verre enroulé sur lui-même. Le faisceau est dirigé par exemple par un jeu de 2 barreaux 63 et 64, cylindriques, au-dessus du bain de résine 73 placé dans une cuve 74. Le faisceau 62 passe ensuite sous un barreau 65 de surface concave selon l'invention, puis sur un barreau 66 de surface d'appui convexe selon l'invention. Il chemine jusqu'à un second barreau 67 de surface convexe identique à la surface du barreau 66, les cheminements des fibres entre les deux surfaces convexes 66 et 67 étant parallèles. La position écartée des fibres de verre dans le bain de résine, est ainsi maintenue sur une longueur maximum. Le faisceau 62 de fibres passe ensuite sous un barreau 68 concave selon l'invention et ressort du bain de résine 73, en étant par exemple orienté horizontalement par un barreau cylindrique 69, vers un dispositif 70 de séchage et des moyens de fractionnement en morceaux du faisceau ou d'enroulement et de stockage du Roving ainsi traité (non représentés).

Des dispositifs 71 d'entraînement des barres ou barreaux concaves et convexes selon l'invention, de type connu, permettant d'aider le déroulement du faisceau 62 tout au long de sa trajectoire dans le bain de résine, peuvent être avantageusement prévus.

Sur la figure 8, on a représenté un système de notation, empirique, permettant d'apprécier la qualité de l'enrobage des fibres d'un faisceau de fibres, obtenu avec un dispositif d'enrobage. La "note" 0 correspondant au dessin indiqué par la référence 80 sur la figure 8, indique une mauvaise imprégnation des fibres (les dessins de la figure 8 donnent une image en coupe du faisceau) et la note 4 correspondant à la référence 84 sur la figure 8, indique une imprégnation optimale.

La figure 9 est un diagramme montrant en abscisse l'échelle des vitesses en mètres par minute, et en ordonnées les "notes" d'imprégnation correspondant aux conventions de la figure 8. Ce diagramme, donné à titre d'exemple pour illustrer les avantages de l'invention par rapport à l'art antérieur, a été obtenu en imprégnant des faisceaux de fibres de verre, dit de "type E", de diamètre de fibres de l'ordre de 20 $\mu$m (17 $\mu$m) avec de la résine du type polypropylène (voir référence ci-dessus).

Les points référencés 91 indiquent des résultats obtenus avec des dispositifs de l'art antérieur comprenant 4 barreaux cylindriques ou convexes de guidage du faisceau, disposés entre le rouleau ou "Roving" de faisceau non imprégné et le rouleau de faisceau après imprégnation.

Les nombres de barreaux exprimés ci-après sont également à compter de la même façon.

Les ronds noirs référencés 92 correspondent aux dispositifs de l'art antérieur comprenant 2 barreaux cylindriques ou convexes.

Les triangles blancs indiqués par les références 93 représentent les résultats obtenus avec un dispositif selon l'invention comprenant 4 barres alternativement convexes/concaves.

Le carré blanc référencé 94 correspond au résultat obtenu avec un dispositif selon l'invention comprenant 8 barres convexes et concaves, alternativement agencées.

Enfin, les ronds blancs indiqués par la référence 95 sur la figure 9, représentent les résultats obtenus avec un mode de réalisation préféré de l'invention correspondant aux figures 6 et 7, comprenant une barre concave, deux barres convexes et une barre concave.

On voit que les résultats obtenus avec les dispositifs selon l'invention sont meilleurs que ceux obtenus avec les dispositifs de type connu.

On va maintenant décrire le procédé d'imprégnation de fibres par de la résine avec un dispositif selon l'invention conforme aux figures 6 et 7.

Le "Roving" 61 est placé sur son support 60, puis le faisceau 62 est déroulé entre les différentes surfaces des barres 63, 64, 65, 66, 67, 68, 69 du dispositif (comme indiqué précédemment) jusqu'à l'enclenchement du faisceau dans le dispositif de traction 70 agencé pour tirer ledit faisceau au travers du bain de résine 73.

Une autre façon de procéder consiste à placer le faisceau sur les barres cylindriques et convexes, les barres concaves ayant été préalablement ôtées, puis à replacer sur le faisceau lesdites barres concaves pour tendre le faisceau.

On vérifie ensuite le bon étalement des fibres sur les surfaces convexes, étalement que l'on aide éventuellement par pression verticale du faisceau sur les surfaces convexes pour permettre une position initiale du faisceau satisfaisante.

Si cela n'a pas été fait au préalable, la résine est ensuite introduite dans le bac 74 à la température nécessaire (en général la température de fusion de la résine + de l'ordre de 10 à 40° C). Le bain est maintenu chauffé en permanence de façon connue en soi.

On déroule ensuite en continu le "Roving" par traction sur le faisceau, dont les fibres s'imprègnent de résine au passage dans le bain. Le bon écartement des fibres est vérifié périodiquement, par exemple visuellement.

La force de traction exercée sur le faisceau à la sortie du bain de résine est par exemple de l'ordre de 50 kg, le faisceau se déroulant à une vitesse de l'ordre de 10m/min. Une fois le faisceau sorti du bain de résine, il est refroidi par exemple par aspersion d'eau qui durci les gaines de résine formée autour des fibres, puis stocké par exemple en rouleau ou coupé en granulés en vue d'une utilisation ultérieure.

## Revendications

**1.** Dispositif d'enrobage en continu des fibres (2) d'un faisceau (1) par de la résine, comprenant :
   - au moins trois surfaces d'appui du faisceau de fibres, à savoir une première surface d'appui (3, 32, 42, 52, 65), une deuxière surface d'appui (4, 4', 33, 43, 53, 65), convexe, placée à distance et à la suite dans le sens d'avancement (5) du faisceau, de la première surface, et une troisième surface d'appui (6, 34, 44, 54, 67) placée à distance et à la suite de la deuxième surface, décalée en hauteur par rapport à au moins l'une des deux premières surfaces, lesdites surfaces définissant entre elles des cheminements (7) pour lesdites fibres,

- des moyens de traction (10, 70) desdites fibres sous tension le long desdits cheminements,
- et des moyens d'enrobage (73, 74) desdites fibres par de la résine sur au moins une fraction de leurs cheminements, **caractérisé en ce que** :
- la première surface (3, 32, 42, 52, 65) présente une configuration sensiblement concave, agencée pour regrouper les fibres du faisceau sensiblement en un même point de regroupement (P), **et en ce que**,
- la deuxième surface (4, 4', 33, 43, 53, 66) convexe, est au moins partiellement une surface de révolution autour d'un axe horizontal (11), ladite surface de révolution appartenant à une surface (4'') de rayon maximum R symétrique par rapport à un plan de symétrie vertical (12) passant par le point de regroupement (P), et remplit sensiblement la condition suivante :

r désignant le rayon de la portion de révolution de la deuxième surface située à une distance x dudit plan de symétrie passant par le point de regroupement (P) :

$$r = R \left[ 1 - \frac{\sqrt{1 + (x/L)^2} - 1}{(\pi/2 - \phi)(R/L)} \right] \quad (1)$$

où L désigne la longueur de la tangente (13) à la surface symétrique (4'') passant par le point de regroupement (P), dans le plan de symétrie, entre ledit point de regroupement (P) et le point de tangence (14) à ladite surface symétrique (4'') et $\phi$ désigne l'angle en radian entre ladite tangente (13) et la verticale, les moyens d'enrobage des fibres étant constitués par un bain de résine (73).

2. Dispositif d'enrobage en continu des fibres (2) d'un faisceau [1] par de la résine, comprenant :
- une première surface d'appui (3, 32, 42, 52, 65) du faisceau de fibres,
- une deuxième surface d'appui (4, 4', 33, 43, 53, 66) du faisceau de fibres, convexe, placée à distance et à la suite dans le sens d'avancement du faisceau, de la première surface,
- une troisième surface d'appui (6, 34, 44, 54, 67) du faisceau de fibres, placée à distance et à la suite de la deuxième surface, décalée en hauteur par rapport à au moins l'une des deux premières surfaces, lesdites surfaces définissant entre elles des cheminements (77) pour lesdites fibres,
- des moyens de traction (10, 70) desdites fibres sous tension le long desdits cheminements,
- et des moyens d'enrobage (73, 74) desdites fibres par de la résine sur au moins une fraction de leurs cheminements, **caractérisé en ce que,**
- la première surface (3, 32, 42, 52, 65) présente une configuration sensiblement concave, agencée pour regrouper les fibres du faisceau sensiblement en un même point de regroupement (P),
- et la deuxième surface (4, 4', 33, 43, 53, 66) présente une configuration telle que, lors de la mise sous tension des fibres par les moyens de traction (10, 70), les fibres s'écartent les unes des autres au contact de ladite deuxième surface en délimitant des portions de cheminements (20) divergentes pour les fibres entre les première et deuxième surfaces, et des portions de cheminements (21) parallèles ou convergentes pour les fibres entre les deuxième et troisième surfaces.
- lesdites portions de cheminements divergentes (20) étant de longueurs égales ou sensiblement égales entre le point de regroupement (P) et les points d'inflexion (X, Y, Z) situés sur ladite deuxième surface entre portions divergentes (20) et portions parallèles ou convergentes (21) correspondantes de cheminement desdites fibres (2), et
- lesdites portions de cheminement parallèles ou convergentes étant de longueurs égales ou sensiblement égales entre lesdits points d'inflexion et ladite troisième surface, les moyens d'enrobage des fibres étant constitués par un bain de résine (73).

3. Dispositif selon l'une quelconque des revendications précédentes, **caractérisé** en ce **que** la troisième surface d'appui (6, 34, 54) est sensiblement concave, agencée pour regrouper les fibres du faisceau sensiblement en un même point de regroupement (P').

**4.** Dispositif selon l'une quelconque des revendications 1 et 2, **caractérisé en ce que** la troisième surface d'appui (44, 67) est convexe, identique à la deuxième surface (43, 66), les cheminements (21) des fibres entre les deuxième et troisième surfaces convexes étant parallèles.

**5.** Dispositif selon l'une quelconque des revendications 1 à 3, **caractérisé** en ce **qu'**il comporte plusieurs surfaces (52, 54, 56, 58) sensiblement concaves de regroupement des fibres sensiblement en de mêmes points de regroupement respectifs, disposées alternativement avec des surfaces (53, 55, 57) convexes d'écartement desdites fibres, lesdites surfaces convexes (53, 55, 57) présentant des configurations délimitant des portions de cheminement divergentes (20, 21) de libres de longueurs égales ou sensiblement égales entre lesdits points de regroupement respectifs et les points des surfaces convexes en vis à vis, où se produit l'inflexion entre portions divergentes et portions convergentes correspondantes de cheminement desdites fibres.

**6.** Dispositif selon l'une quelconque des revendications 1 à 3, **caractérisé** en ce **qu'**il comporte plusieurs surfaces (52, 54, 56, 58) concaves de regroupement de fibres sensiblement en de mêmes points de regroupement respectifs alignés ($P_1$, $P_2$, ... $P_n$) disposées alternativement avec des surfaces (53, 55, 57) convexes d'écartement desdites fibres, lesdites surfaces convexes étant au moins partiellement de révolution de rayon maximum R autour d'axes horizontaux respectifs, étant symétriques par rapport à un même plan de symétrie vertical passant par lesdits points de regroupement ($P_1$; $P_2$, .. $P_n$), et remplissant sensiblement la condition suivante :

r désignant le rayon de la portion de révolution des surfaces convexes respectives, située à une distance x du plan de symétrie passant par les points de regroupement ($P_1$, $P_2$, .. $P_n$) :

$$r = R \left[ 1 - \frac{(\sqrt{1 + (x/L)^2} - 1)}{(\pi/2 - \phi)(R/L)} \right] \quad (1)$$

où L désigne la longueur de la tangente à une surface convexe passant par le point de regroupement ($P_1$) correspondant dans ledit plan de symétrie entre ledit point de regroupement ($P_1$) et le point de tangence à ladite surface convexe, et $\phi$ désigne l'angle en radian entre ladite tangente et la verticale.

**7.** Dispositif selon l'une quelconque des revendications précédentes, **caractérisé en** ce que lesdites surfaces sensiblement concaves et lesdites surfaces convexes appartiennent à des barreaux d'axes horizontaux.

**8.** Dispositif selon la revendication 7, **caractérisé en ce qu'**il comporte deux barreaux identiques (65, 68) de surface sensiblement concave et deux barreaux identiques (66, 67) de surface convexe, disposés entre les deux barreaux de surface sensiblement concave.

**9.** Dispositif selon l'une quelconque des revendications précédentes, **caractérisé** en ce **que** les surfaces sensiblement concaves présentent une section droite en oméga majuscule dont les branches sont inclinées vers l'extérieur et dont la partie centrale est horizontale, de longueur inférieure à de l'ordre de 1 cm, et avantageusement de l'ordre de 3 mm.

**10.** Dispositif selon l'une quelconque des revendications précédentes, **caractérisé en ce que** les surfaces d'appui sont recouvertes de céramique, avantageusement à base de nitrure de titane.

## Claims

**1.** Device for continuously coating fibres (2) in a bundle (1) with resin, comprising:
- at least three bearing surfaces for the fibre bundle, i.e. a first bearing surface (3, 32, 42, 52, 65), a second, convex bearing surface (4, 4', 33, 43, 53, 65) located at a distance from and, in the feed direction (5) of the bundle, following the first surface, and a third bearing surface (6, 34, 44, 54, 67) located at a distance from and following the second surface, vertically offset relative to at least one of the two first surfaces, the surfaces defining therebetween paths (7) for the fibres;

- means (10, 70) for drawing the fibres under tension along the paths; and
- means (73, 74) for coating the fibres with resin over at least part of their paths, characterised in that:
- the first surface (3, 32, 42, 52, 65) has a substantially concave configuration, arranged so as to assemble the fibres of the bundle substantially at the same assembly point (P); and in that:
- the second, convex surface (4, 4', 33, 43, 53, 66) is at least partially a surface of revolution about a horizontal axis (11), the surface of revolution forming part of a surface (4'') having a maximum radius R which is symmetrical relative to a vertical plane of symmetry (12) passing through the assembly point (P), and substantially satisfies the following condition,

r designating the radius of the portion of revolution of the second surface located at a distance x from the plane of symmetry passing through the assembly point (P):

$$ r = R \left[ 1 - \frac{\sqrt{1 + (x/L)^2} - 1}{(\pi/2 - \phi)(R/L)} \right] \quad (1) $$

in which L designates the length of the tangent (13) at the symmetrical surface (4) passing through the assembly point (P), in the plane of symmetry, between the assembly point (P) and the tangential point (14) on the symmetrical surface (4'') and $\phi$ designates the radian angle between the tangent (13) and the vertical, the fibre coating means consisting of a resin bath (73).

2. Device for continuously coating fibres (2) in a bundle (1) with resin, comprising:
- a first bearing surface (3, 32, 42, 52, 65) of the fibre bundle;
- a second, convex bearing surface (4, 4', 33, 43, 53, 66) of the fibre bundle, located at a distance from and following the first surface in the feed direction of the bundle;
- a third bearing surface (6, 34, 44, 54, 67) of the fibre bundle, located at a distance from and following the second surface, vertically offset relative to at least one of the first two surfaces, the surfaces defining therebetween paths (77) for the fibres;
- means (10, 70) for drawing the fibres under tension along the paths; and
- means (73, 74) for coating the fibres with resin over at least a part of their paths; characterized in that:
- the first surface (3, 32, 42, 52, 65) has a substantially concave arrangement, arranged so as to assemble the fibres of the bundle substantially at the same assembly point (P); and
- the second surface (4, 4', 33, 43, 53, 66) has an arrangement such that, when the fibres are tensioned by the drawing means (10, 70), the fibres move away from one another on contact with the second surface, delimiting divergent path portions (20) for the fibres between the first and second surfaces, and parallel or converging path portions (21) for the fibres between the second and third surfaces;
- the diverging path portions (20) having lengths which are equal or substantially equal between the assembly point (P) and the inflexion points (X, Y, Z) located on the second surface between diverging path portions (20) and corresponding parallel or converging path portions (21) of the fibres (2); and
- the parallel or converging path portions being of lengths which are equal or substantially equal between the inflexion points and the third surface, the fibre coating means consisting of a resin bath (73).

3. Device according to either one of the preceding claims, characterised in that the third bearing surface (6, 34, 54) is substantially concave and arranged to assemble the fibres of the bundle substantially at the same assembly point (P').

4. Device according to either one of Claims 1 and 2, characterized in that the third bearing surface (44, 67) is convex and identical to the second surface (43, 66), the paths (21) of the fibres between the second and third convex surfaces being parallel.

5. Device according to any one of Claims 1 to 3, characterised in that it comprises a plurality of surfaces (52, 54, 56, 58) which are substantially concave for assembling the fibres substantially at the same respective assembly points, disposed alternately with the convex surfaces (53, 55, 57) for moving apart these fibres, the convex surfaces (53, 55, 57) having arrangements delimiting the diverging fibre path portions (20, 21) of lengths which are equal or substantially equal between the respective assembly points and the opposite points of the convex surfaces, at which the inflexion between corresponding diverging and converging path portions of the fibres is produced.

6. Device according to any one of Claims 1 to 3, characterised in that it comprises a plurality of concave surfaces (52, 54, 56, 58) for assembling fibres substantially at given respective aligned assembly points $(P_1, P_2, ... P_n)$ disposed alternately with convex surfaces (53, 55, 57) for moving apart the fibres, the convex surfaces being at least partially surfaces of revolution with a maximum radius R about respective horizontal axes, being symmetrical relative to a given vertical plane of symmetry passing through the assembly points $(P_1, P_2, ... P_n)$ and substantially satisfying the following condition:
r designating the radius of the portion of revolution of the respective convex surfaces, located at a distance x from the plane of symmetry passing through the assembly points $(P_1, P_2, ... P_n)$:

$$r = R \left[ 1 - \frac{(\sqrt{1 + (x/L)^2} - 1)}{(\pi/2 - \phi)(R/L)} \right] \quad (1)$$

in which L designates the length of the tangent at a convex surface passing through the corresponding assembly point $(P_1)$ in the plane of symmetry, between the assembly point $(P_1)$ and the tangential point at the convex surface, and $\phi$ designates the radian angle between the tangent and the vertical.

7. Device according to any one of the preceding claims, characterised in that the substantially concave surfaces and the convex surfaces belong to bars with horizontal axes.

8. Device according to Claim 7, characterised in that it comprises two identical bars (65, 68) having substantially concave surfaces and two identical bars (66, 67) having convex surfaces, disposed between the two bars with substantially concave surfaces.

9. Device according to any one of the preceding claims, characterised in that the substantially concave surfaces have a cross-section in the form of a capital omega of which the branches are inclined outwards and of which the central part is horizontal and has a length of less than approximately 1 cm, and advantageously of approximately 3 mm.

10. Device according to any one of the preceding claims, characterised in that the bearing surfaces are covered with ceramics, advantageously based on titanium nitride.

**Patentansprüche**

1. Vorrichtung zum kontinuierlichen Ummanteln der Fasern (2) eines Bündels (1) mit Harz, umfassend
   - wenigstens drei Auflageflächen für das Faserbündel, nämlich eine erste Auflagefläche (3, 32, 42, 52, 65), eine konvexe zweite Auflagefläche (4, 4', 33, 43, 53, 65), die nach der ersten Fläche mit Abstand in der Durchlaufrichtung (5) des Faserbündels angeordnet ist, und eine dritte Auflagefläche (6, 34, 44, 54, 67), die nach der zweiten Fläche mit Abstand angeordnet und in ihrer Höhe in bezug auf wenigstens eine der ersten beiden Flächen versetzt ist, wobei diese Flächen untereinander Durchlaufstrecken (7) für die Fasern bilden,
   - Antriebsmittel (10, 70), welche die Fasern entlang dieser Durchlaufstrecken unter Spannung halten, und
   - Mittel (73, 74) zum Ummanteln der Fasern mit Harz in wenigstens einem Teil ihrer Durchlaufstrecken,
   **dadurch gekennzeichnet, daß**

- die erste Fläche (3, 32, 42, 52, 65) eine im wesentlichen konkave Gestaltung aufweist und eingerichtet ist, um die Fasern des Bündels im wesentlichen in ein und demselben Anordnungspunkt (P) anzuordnen,

**und daß**

- die konvexe zweite Fläche (4, 4', 33, 43, 53, 66) wenigstens teilweise eine Rotationsfläche um eine horizontale Achse (11) ist, wobei diese Rotationsfläche zu einer Fläche (4'') mit dem maximalen Radius R gehört, welche bezüglich einer vertikalen, durch den Anordnungspunkt (P) verlaufenden Symmetrieebene (12) symmetrisch ist und im wesentlichen folgende Bedingung erfüllt, in welcher mit r der Radius des Rotationsteils der zweiten Fläche bezeichnet ist, der sich im Abstand x von der durch den Anordnungspunkt (P) verlaufenden Symmetrieebene befindet:

$$r = R \left[ 1 - \frac{\sqrt{1 + (x/L)^2} - 1}{(\pi/2 - \phi)\,(R/L)} \right] \quad (1),$$

worin mit L die Länge der Tangente (13) an der Symmetriefläche (4''), die durch den in der Symmetrieebene befindlichen Anordnungspunkt (P) verläuft, zwischen diesem Anordnungspunkt (P) und dem Berührungspunkt (14) auf dieser Symmetriefläche (4''), und mit $\phi$ der Winkel in rad zwischen dieser Tangente (13) und der Senkrechten bezeichnet ist, wobei die Mittel zum Ummanteln der Fasern von einem Harzbad (73) gebildet werden.

2. Vorrichtung zum kontinuierlichen Ummanteln der Fasern (2) eines Bündels (1) mit Harz, umfassend:
   - eine erste Auflagefläche (3, 32, 42, 52, 65) für das Faserbündel,
   - eine konvexe zweite Auflagefläche (4, 4', 33, 43, 53, 66), die nach der ersten Fläche mit Abstand in der Durchlaufrichtung des Faserbündels angeordnet ist,
   - eine dritte Auflagefläche (6, 34, 44, 54, 67) für das Faserbündel, die nach der zweiten Fläche mit Abstand angeordnet und in ihrer Höhe in bezug auf wenigstens eine der ersten beiden Flächen versetzt ist, wobei diese Flächen untereinander Durchlaufstrecken (77) für die Fasern bilden,
   - Antriebsmittel (10, 70), welche die Fasern entlang dieser Durchlaufstrecken unter Spannung halten, und
   - Mittel (73, 74) zum Ummanteln der Fasern mit Harz in wenigstens einem Teil ihrer Durchlaufstrecken,

   **dadurch gekennzeichnet, daß**
   - die erste Fläche (3, 32, 42, 52, 65) eine im wesentlichen konkave Gestaltung aufweist und eingerichtet ist, um die Fasern des Bündels im wesentlichen in ein und demselben Anordnungspunkt (P) anzuordnen, und
   - die zweite Fläche (4, 4', 33, 43, 53, 66) eine solche Gestaltung aufweist, daß sich die Fasern, während sie durch die Antriebsmittel (10, 70) gespannt gehalten werden, in Berührung mit dieser zweiten Fläche zueinander aufspreizen, wobei die divergierenden Teile der Durchlaufstrecke (20) der Fasern von der ersten und der zweiten Fläche und die parallelen oder konvergierenden Teile der Durchlaufstrecke (21) der Fasern von der zweiten und der dritten Fläche begrenzt werden, wobei
   - die Längen dieser divergierenden Teile der Durchlaufstrecke (20) zwischen dem Anordnungspunkt (P) und den Wendepunkten (X, Y, Z), die sich auf dieser zweiten Fläche zwischen den divergierenden (20) und den entsprechenden parallelen oder konvergierenden Teilen (21) der Durchlaufstrecke der Fasern (2) befinden, gleich oder im wesentlichen gleich sind und
   - die Längen dieser Teile der parallelen oder konvergierenden Durchlaufstrecke zwischen den Wendepunkten und der dritten Fläche gleich oder im wesentlichen gleich sind, wobei die Mittel zum Ummanteln der Fasern von einem Harzbad (73) gebildet werden.

3. Vorrichtung nach einem der vorhergehenden Ansprüche, **dadurch gekennzeichnet, daß** die dritte Auflagefläche (6, 34, 54) im wesentlichen konkav und für die Anordnung der Fasern des Bündels im wesentlichen in ein und demselben Anordnungspunkt (P') eingerichtet ist.

12

**4.** Vorrichtung nach Anspruch 1 oder 2, **dadurch gekennzeichnet, daß** die dritte Auflagefläche (44, 67) konvex und gleich der zweiten Fläche (43, 66) ist, wobei die Teile der Durchlaufstrecke (21) der Fasern zwischen der konvexen zweiten und dritten Fläche parallel sind.

**5.** Vorrichtung nach einem der Ansprüche 1 bis 3, **dadurch gekennzeichnet, daß** sie für die Anordnung der Fasern jeweils im wesentlichen in ein und demselben Anordnungspunkt mehrere im wesentlichen konkave Flächen (52, 54, 56, 58) umfaßt, die abwechselnd mit konvexen Flächen (53, 55, 57) zum Beabstanden dieser Fasern angeordnet sind, wobei diese konvexen Flächen (53, 55, 57) Gestaltungen aufweisen, welche die divergierenden Teile (20, 21) der Durchlaufstrecke der Fasern begrenzen, deren Längen zwischen den jeweiligen Anordnungspunkten und den ihnen gegenüberliegenden Punkten auf den konvexen Flächen, in denen das Wenden zwischen den entsprechenden divergierenden und konvergierenden Teilen der Durchlaufstrecke der Fasern stattfindet, gleich oder im wesentlichen gleich sind.

**6.** Vorrichtung nach einem der Ansprüche 1 bis 3, **dadurch gekennzeichnet, daß** sie für die Anordnung der Fasern jeweils im wesentlichen in denselben ausgerichteten Anordnungspunkten ($P_1$, $P_2$, ... $P_n$) mehrere konkave Flächen (52, 54, 56, 58) umfaßt, die abwechselnd mit konvexen Flächen (53, 55, 57) zum Beabstanden dieser Fasern angeordnet sind, wobei diese konvexen Flächen wenigstens teilweise Rotationsflächen mit dem maximalen Radius R um die jeweilige horizontale Achse sind, welche bezüglich ein und derselben vertikalen, durch die Anordnungspunkte ($P_1$, $P_2$,...$P_n$) verlaufenden Symmetrieebene symmetrisch sind und im wesentlichen folgende Bedingung erfüllen, in welcher mit r der Radius des Rotationsteils der jeweiligen konvexen Fläche bezeichnet ist, der sich im Abstand x von der durch die Anordnungspunkte ($P_1$, $P_2$,...$P_n$) verlaufenden Symmetrieebene befindet:

$$r = R\left[1 - \frac{\left(\sqrt{1 + (x/L)^2} - 1\right)}{(\pi/2 - \phi)\,(R/L)}\right] \quad (1),$$

worin mit L die Länge der Tangente an einer konvexen Fläche, die durch den entsprechenden in dieser Symmetrieebene befindlichen Anordnungspunkt ($P_1$) verläuft, zwischen diesem Anordnungspunkt ($P_1$) und dem Berührungspunkt auf dieser konvexen Fläche, und mit $\phi$ der Winkel in rad zwischen dieser Tangente und der Senkrechten bezeichnet ist.

**7.** Vorrichtung nach einem der vorhergehenden Ansprüche, **dadurch gekennzeichnet, daß** die im wesentlichen konkaven und die im wesentlichen konvexen Flächen zu Stäben mit horizontalen Achsen gehören.

**8.** Vorrichtung nach Anspruch 7, **dadurch gekennzeichnet, daß** sie zwei gleiche Stäbe (65, 68) mit im wesentlichen konkaver Oberfläche und zwei gleiche Stäbe (66, 67) mit konvexer Oberfläche umfaßt, die zwischen den beiden Stäben mit im wesentlichen konkaver Oberfläche angeordnet sind.

**9.** Vorrichtung nach einem der vorhergehenden Ansprüche, **dadurch gekennzeichnet, daß** die im wesentlichen konkaven Flächen einen Querschnitt in Form eine großen Omegas aufweisen, dessen Seitenarme nach außen geneigt sind und dessen zentraler Teil horizontal verläuft und dessen Länge weniger als etwa 1 cm und vorteilhafterweise etwa 3 mm beträgt.

**10.** Vorrichtung nach einem der vorhergehenden Ansprüche **dadurch gekennzeichnet, daß** die Auflageflächen mit Keramik, vorteilhafterweise auf der Grundlage von Titannitrid, beschichtet sind.

# FIG.1

# FIG.2

FIG.4

FIG. 3

# FIG.5A

# FIG.5B

# FIG.5C

FIG.6

FIG.7

FIG .8

FIG.9

S

(m / min)

EP 0 418 150 B1